# EUROPÄISCHE PATENTSCHRIFT

(11) **EP 2 960 029 B1**
(45) Veröffentlichungstag und Bekanntmachung des Hinweises auf die Patenterteilung: **25.07.2018**
(21) Anmeldenummer: 15169261.3
(22) Anmeldetag: 26.05.2015
(51) Int. Cl.: B29B 9/08, B29B 9/14, B29C 45/00, B29B 7/92, B29B 9/16, B29C 45/46, B29B 7/90

(54) **VERFAHREN ZUM HERSTELLEN EINES NATURFASERVERSTÄRKTEN KUNSTSTOFFTEILS**
METHOD FOR PRODUCING A PLASTIC PART REINFORCED WITH NATURAL FIBRES
PROCÉDÉ DE FABRICATION D'UNE PIÈCE SYNTHÉTIQUE RENFORCÉE DE FIBRES NATURELLES

(30) Priorität: 24.06.2014 DE 102014108820
(43) Veröffentlichungstag der Anmeldung: 30.12.2015
(73) Patentinhaber: HIB Trim Part Solutions GmbH, 76646 Bruchsal (DE)
(72) Erfinder: Schnabel, Uwe, 76646 Bruchsal (DE)
(74) Vertreter: Peter, Julian

(56) Entgegenhaltungen:
- WO-A1-02/22335
- WO-A1-2006/001717
- DE-A1-102008 046 770
- DE-C1- 19 960 991
- JP-A- 2006 272 696
- US-A1- 2010 258 969
- US-A1- 2013 207 297
- US-A1- 2013 276 670
- CLARIANT INTERNATIONAL LTD: "Waxes for ENGINEERING THERMOPLASTICS", 2013, Switzerland pages 1-24, * page 1 - page 24 *
- CLARIANT INTERNATIONAL LTD: "Lubricants for plastic processing LICOWAX, LICOLUB, LICOCENE, LICOMONT", 2013, Switzerland pages 1-8, * page 1 - page 8 *

## Beschreibung

Die Erfindung betrifft ein Verfahren zum Herstellen eines naturfaserverstärkten Kunststoffteils.

Neben den glasfaserverstärkten Kunststoffen sind naturfaserverstärkte Kunststoffe seit vielen Jahren bekannt und werden in vielfältiger Weise eingesetzt. Dabei bestehen die verwendeten thermoplastischen naturfasergefüllten Kunststoffgranulate meist aus maximal 45% kurzen Naturfasern, mindestens 50% eines mineralölbasierten Polymers oder Biopolymers und bis zu 10% Additiven inklusive 5% Haftvermittlern. Diese Komponenten werden meist in einem separaten Arbeitsgang in einem Extruder bei ca. 180°C heiß vermischt, granuliert und abgekühlt. Die Naturfaserlänge wird in diesem Prozess stark gekürzt und über den Haftvermittler fest mit dem Polymer verbunden. Beispielsweise offenbart die DE 10 2008 046 770 A1 ein derartiges Verfahren. Ein weiterer Stand der Technik, bei dem das Ausgangsmaterial zunächst zu einem Composite extrudiert und anschließend pelletiert wird, ist aus der US 2013/0276670 A1 bekannt.

Für die Verarbeitung in Spritzgießmaschinen ist generell üblich, über den Extruder zunächst ein Kunststoffgranulat zu erzeugen, das unmittelbar oder nach einer zusätzlichen Pelletierung an die Spritzgießmaschine zugeführt wird. Während des Extrudierens werden die Faserlängen der Naturfasern so stark gekürzt (auf 1 - 3 mm), dass diese in der Spritzgießmaschine verarbeitet werden können, ohne die Gefahr, die Düse zu verstopfen. Auch lag aus praktischer Verarbeitungssicht im Spritzguss die maximale Obergrenze bei 45 Gewichtsprozent Naturfasern. Bei noch größeren Anteilen ist die Gefahr des Verstopfens besonders hoch, wodurch erhebliche und kostenintensive Beschädigungen an der Spritzgussmaschine entstünden. Durch den Einsatz eines Haftvermittlers wird die Reibung durch die langen Fasern im Extruder der Spritzgussmaschine so stark erhöht, dass es zu einem Zusetzen, im Extremfall zum Zerstören, des Heißkanals im Spritzgusswerkzeug kommen kann.

An der starken Kürzung der Naturfaserlänge ist jedoch hinsichtlich des zu fertigen Bauteils nachteilig, dass die mechanischen Materialeigenschaften generell negativ beeinflusst werden. Beispielsweise sind Bruchkanten bei Kunststoffteilen mit kurzen Faserlängen, die durch den Haftvermittler starr in die Kunststoffmatrix eingebunden sind, deutlich scharfkantiger als bei der Verwendung von längeren Fasern. Dies nimmt man jedoch für die Verarbeitbarkeit des Granulats in Kauf. Aus dem Stand der Technik DE 10 2011 116 397 A1 ist beispielsweise ein Pultrusionsverfahren bekannt, bei dem ein kontinuierliches Faserbündel mit Harz imprägniert wird. Es handelt sich um ein Heiß-Verfahren, bei dem Faserbündel durch einen Kreuzkopf eines Extruders geleitet, in dem Kreuzkopf mit geschmolzenem Harz umhüllt und dabei thermisch werden. Die Wärmeeinwirkung erfolgt bereits im Extruder. Die Fasern im erzeugten Pellet erstrecken sich ausschließlich in Längsrichtung und im Wesentlichen parallel. Das Verfahren ist arbeitsintensiv und somit teuer.

Als Fasermaterialien kommen bisher unter anderem Holzfasern, Flachsfasern, Sisalfasern und Hanffasern zum Einsatz. Als weiterer Stand der Technik wird noch auf die WO 02/22335 A1 verwiesen, die zur Herstellung eines aus einem feinpartikulären thermoplastischen oder thermoelastischen Polymer und einem Füllstoff in pulvriger bis fasriger Konsistenz wie beispielsweise Naturfasern bestehenden rieselfähigen Zwischenproduktes ohne Zusatz eines Gleitmittels und dergleichen für die Weiterverarbeitung zu Kunststoff-Formkörpern durch thermoplastische Verarbeitungsverfahren, beispielsweise in einer herkömmlichen Spritzgussmaschine, vorschlägt, ein Polymer in Pulver-oder Partikelform mit diesem Füllstoff zu mischen und die Pulvermischung ohne Plastifizieren des Polymers zuerst zu einem strang- oder bahnförmigen Material zu kompaktierten und dann in einer Zerkleinerungsapparatur mittels umlaufender Schläger oder Messer in rieselfähige Agglomerate zu zerteilen. Ein solches rieselfähiges Agglomerat lässt sich nachfolgend zu Formkörpern verarbeiten, wobei bei der Herstellung des Zwischenproduktes einerseits thermische Beeinträchtigungen sowohl der Füllstoffe als auch der Molekularstruktur des Polymers zuverlässig vermieden werden und andererseits hohe Füllgrade erzielt werden können.

Der Erfindung liegt die Aufgabe zugrunde, ein Herstellverfahren für naturfaserverstärkte Kunststoffteile mit gegenüber dem Stand der Technik längeren Naturfasern ohne Zusatz von Haftvermittlern zur Verarbeitung im Spritzguss bereit zu stellen.

Diese Aufgabe wird durch die Merkmalskombination aus Patentanspruch 1 gelöst.

Die langen Naturfasern im Kunststoff erzeugen höhere Steifigkeiten und Festigkeiten. Das Ausgangsmaterial aus Thermoplast oder Duroplast mit Naturfasern in kaltverformter pelletierter Form zuzuführen, ohne vorher zum Compoundieren ein Extrusionsverfahren zu durchlaufen, ist ferner dahingehend vorteilhaft, dass eine geringere Kürzung der Fasern erfolgt. Beim Pelletieren werden die Fasern auf eine maximal definierte Länge eingekürzt.

Die erste Wärmeeinwirkung auf die Materialien des Pellets, die größer ist als der Schmelzpunkt des Matrixmaterials, erfolgt nicht wie im Stand der Technik bereits in einem vorgelagerten Extruder, sondern erst in der Spritzgussmaschine.

Das verwendete Ausgangsmaterial ist chemisch bindemittelfrei, es werden ausschließlich der Thermoplast oder Duroplast, das Gleitmittel und die Naturfasern zur Pelletherstellung verwendet.

Die Verwendung von Wachs anstelle eines herkömmlichen Haftvermittlers bietet den Vorteil, dass sich die Naturfasern durch den niedrigen Schmelzpunkt des Wachses in der Schmelze während der Verarbeitung in der Spritzgussmaschine frei bewegen können und dadurch nicht so stark eingekürzt werden. Zudem unterstützt das Wachs die Verkettung der Naturfasern während des Spritzgießens, so dass die Faserverteilung im Bauteil erheblich gleichmäßiger ist. Als Wachs kann beispielsweise Polyethylen-Wachs verwendet werden. Erfindungsgemäß werden vorzugsweise Naturfasern aus geröstetem Hanf, geröstetem Flachs oder Bambus verwendet.

Vorteilhafterweise weisen die Naturfasern in den Langfaserpellets nach der Kaltverformung eine Länge von 5 - 40 mm, weiter bevorzugt 5 - 30 mm, weiter bevorzugt 5 - 16 mm auf. Nach der Verarbeitung der Pellets im Spritzguss und dem Spritzen des Kunststoffteils ist vorgesehen, dass die vorzugsweise 5 - 16mm langen Naturfasern anschließend im gespritzten Kunststoffteil noch eine Länge von 5 - 14 mm aufweisen. Dies begünstigt insbesondere die mechanischen Eigenschaften des Bauteils. Gegenüber den bekannten Verfahren ist somit eine deutliche Verlängerung der Naturfaserlänge im fertigen Bauteil erreicht, da bisherige Faserlängen im endgültigen Bauteil zumeist nicht länger sind als 3mm.

Bei der Pelletierung ist günstig, dass die Naturfasern in den langfaserigen Pellets nur eine einzige Richtungsänderung aufweisen, wobei die Naturfasern jeweils einmal umgelenkt werden und sich ihre Gesamtlänge im Pellet verdoppelt. Praktisch gesehen werden die Naturfasern hierzu in Längsrichtung zu der Längsachse der zylindrischen Pellets zugeführt und einmal um ca. 180 Grad umgelenkt, so dass sie sich im Wesentlichen U-förmig innerhalb der Längsachse des Pellets erstrecken.

Die erzeugten Langfaserpellets weisen vorzugsweise eine Länge von 5 - 30 mm und einen Durchmesser von 4 - 7 mm auf.

Die Richtungsänderung bzw. Umlenkung der Fasern wird durch die Pelletherstellung mit Pelletier-Matrize erreicht. Dabei wird vorgesehen, dass Fasern als Schüttgut und Thermoplast oder Duroplast in einer definierten Gewichtsverteilung dem Pelletierprozess zugeführt werden, wobei der Thermoplast oder Duroplast in Form eines Micro-Granulats mit einem Durchmesser von 1 - 3 mm vorliegt.

Zur Erreichung der erfindungsgemäß gewünschten Größe der Pellets wird eine Pelletier-Matrize mit einem Lochdurchmessers von 5mm bis 6mm verwendet.

Als vordefinierte Gewichtsverteilung wird eine Gewichtsverteilung von 50% bis 55% Naturfasern und 45% bis 50% Thermoplast und Wachs bzw. Additive festgelegt.

Beim Einsatz einer Flachmatrizenpresse als Pelletier-Matrize zur Pelletherstellung wirkt der Thermoplast in Form von Micro-Granulat als Einzugshilfe für die Naturfaser in die Lochung der Matrize. Das bedeutet, dass die lose in der Pelletiermatrize liegenden Naturfasern durch die Granulatelemente beim Eintritt in die Lochung eine Umbiegung erfahren. Als "Micro-Granulat" ist vorliegend eine Korngröße mit einem Durchmesser von kleiner als 3 mm definiert. Die nicht vorbehandelte Naturfaser, im speziellen Fall Hanf und Flachs, lässt eine Biegung von größer als 180° mit einem Biegeradius von kleiner als 3 mm zu, so dass es beim Einzug in die Pelletier-Matrize von dem Micro-Granulat entlang seiner Granulatoberfläche gebogen werden kann. Materialien, die diese Forderungen nicht erfüllen, wie zum Beispiel Bambusfasern, werden in der Flachmatrizenpresse klein gemahlen, wie es im Stand der Technik beim Einsatz von Extrudern geschieht.

Mit dem erfindungsgemäßen Verfahren können eine Vielzahl von Naturfasern nebeneinander innerhalb der Langfaserpellets angeordnet und der Gesamtanteil in Gewichtsprozent auf über 50% festgelegt werden, ohne dass die Fasern in der Spritzgussmaschine zum Verstopfen der Düse führen. Günstig ist bei dem erfindungsgemäßen Verfahren, dass die Naturfasern während des Spritzgießens verkettet werden und somit die mechanischen Eigenschaften des zu fertigen Bauteils verbessern. Über die Faserlänge in Verbindung mit einer über 50% anteiligen Faserfüllung ergibt sich im fertigen Bauteil eine mattenähnliche Faserstruktur. Durch die mechanische Verkrallung bzw. Umschlingung werden die mechanischen Werte sowie die Schlagzähigkeit deutlich erhöht. Bei einem Bruch des Bauteils werden die polaren Langfasern aus der unpolaren Matrix herausgezogen ohne eine scharfe Bruchstelle zu erzeugen. Hierbei kann das Bauteil deutlich höhere Schlagkräfte absorbieren.

In einer Ausführungsform der Erfindung werden den Langfaserpellets Additive, insbesondere Gleitmittel, Färbemittel und/oder natürliche Füllstoffe zugefügt werden, um die Verarbeitbarkeit, die mechanischen Eigenschaften bzw. die Optik anzupassen.

Erfindungsgemäß wird vorgesehen, dass der Anteil an Naturfasern mindestens 50 Gewichtsprozent, der Anteil an Thermoplast oder Duroplast höchstens 48 Gewichtsprozent und der Anteil an Wachs mindestens 2 Gewichtsprozent beträgt. Zwar ist im Stand der Technik beschrieben, dass Naturfaseranteile von über 50% verwendet würden, jedoch konnten derartige Zusammensetzungen mit Faserlängen von größer als 3 mm nicht im Spritzguss verarbeitet werden. Tatsächlich beschränkt sich der Naturfaseranteil zur Verarbeitung von Kunststoffen im Granulat bei Spritzgussmaschinen derzeit auf maximal 45%. Durch die mechanische Pelletierung und die Ausrichtung der Naturfasern im Pellet kann der Anteil deutlich erhöht werden.

In Ausführungsformen der Erfindung ist vorgesehen, dass die Thermoplaste aus der Gruppe der Polyolefine, insbesondere Polypropylen, Blendsystemen und biologische Kunststoffen ausgewählt sind.

Auch sind mit dem erfindungsgemäßen Verfahren Bauteile herstellbar, bei denen eine zwei- oder dreidimensionale Dekorfläche des Kunststoffteils direkt hinterspritzt wird. Dabei können auch Anbindungselemente bzw. Befestigungselemente mit angespritzt werden. Das Dekorbauteil ist mithin in einem Arbeitsgang fertigbar.

Andere vorteilhafte Weiterbildungen der Erfindung sind in den Unteransprüchen beschrieben. Als Varianten wären darüber hinaus beispielsweise denkbar, verschiedene Naturfaserarten zu mischen oder die Pelletgröße anzupassen, um die Faserlängen weiter zu vergrößern.

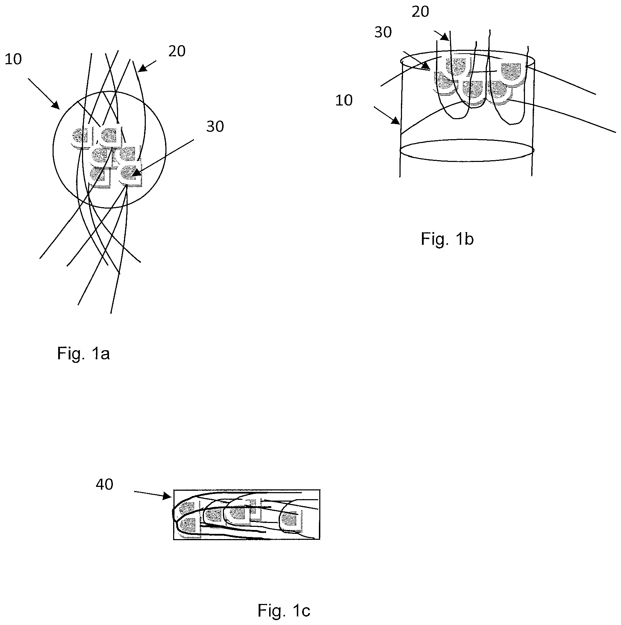

Die beigefügten Figuren 1a - 1c zeigen beispielhaft schematisch das kaltverformende Pelletierverfahren sowie ein kaltverformtes Pellet zur anschließenden Zuführung an eine herkömmliche Spritzgussmaschine.

In Figur 1a ist eine schematische Draufsicht auf eines von vielen Löchern 10 einer Flachmatrizenpresse gezeigt. In der Flachmatrizenpresse werden Naturfasern 20 eingelegt und erstrecken sich über Randabschnitte der Löcher 10. Ferner wird mit Gleitmittel versehener Thermoplast oder Duroplast in Form von Micro-Granulat 30 eingebracht, so dass eine ungeordnete Mischung aus Naturfasern 20 und Micro-Granulat 30 vorliegt. Über einen nicht gezeigten Stempel werden die Naturfasern 20 und das Micro-Granulat 30 gemäß der schematischen Seitenansicht nach Figur 1b durch die Löcher 10 gepresst, wobei das Micro-Granulat 30 die Naturfaser 20 teilweise umschließt und eine Umbiegung der von Micro-Granulat 30 erfassten Naturfasern 20 von bis zu 180° erzeugt. Das Micro-Granulat 30 wirkt als Einzugshilfe für die Naturfasern 20 in das jeweilige Loch 10 der Pelletiermatrize. Der Prozess erfolgt im kalten Zustand ohne aktive Wärmeeinbringung. Ein aus den Löchern 10 gepresstes Pellet 40 mit ungeordnet darin verteiltem Micro-Granulat 30 und Naturfasern ist in Figur 1c dargestellt. Die Gesamtfaserlänge der Naturfasern 20 im erzeugten Pellet 40 kann durch die Umbiegung auf bis zu 40mm deutlich vergrößert werden. Das Pellet 40 wird einer Spritzgussmaschine zugeführt und das zu erzeugende Kunststoffteil im Spritzguss gespritzt. Die Naturfasern weisen anschließend im gespritzten Kunststoffteil noch eine messbare Länge von 5 - 14 mm auf.

## Patentansprüche

1. Verfahren zum Herstellen eines naturfaserverstärkten Kunststoffteils, wobei als Ausgangsmaterial 5 bis 120 mm lange lose Naturfasern als Schüttgut, ein Thermoplast oder Duroplast vorliegend in Form eines Micro-Granulats mit einem Durchmesser von 1 bis 3 mm, in einer definierten Gewichtsverteilung mit einem Gleitmittel zum Pelletieren einer Pelletiermatrize zugeführt und unextrudiert zu Langfaserpellets unter Kaltverformung in einem Temperaturbereich von 25°C bis 85°C pelletiert werden und die Langfaserpellets anschließend zur Verarbeitung an eine Spritzgussmaschine zum Spritzen des Kunststoffteils zugeführt werden.

2. Verfahren nach Anspruch 1, **dadurch gekennzeichnet, dass** die Naturfasern in den Langfaserpellets ungeordnet verteilt werden, bei der Kaltverformung mindestens eine richtungsändernde Umbiegung erfahren und eine Länge von 5 bis 40 mm aufweisen.

3. Verfahren nach Anspruch 1 oder 2, **dadurch gekennzeichnet, dass** das Ausgangsmaterial bindemittelfrei ist.

4. Verfahren nach Anspruch 1, 2 oder 3, **dadurch gekennzeichnet, dass** die Langfaserpellets eine Länge von 5 bis 30 mm und einen Durchmesser von 4 bis 7 mm aufweisen.

5. Verfahren nach zumindest einem der Ansprüche 1 bis 4, **dadurch gekennzeichnet, dass** die Naturfasern und der Thermoplast oder Duroplast und das Gleitmittel zum Pelletieren einer Pelletiermatrize zugeführt und unter der Kaltverformung durch die Pelletiermatrize gedrückt werden, wobei die Naturfasern durch die Pelletiermatrize umgelenkt werden und im erzeugten Langfaserpellet eine Gesamtlänge aufweisen, die größer ist als die Länge des Langfaserpellets.

6. Verfahren nach dem vorigen Anspruch, **dadurch gekennzeichnet, dass** der Thermoplast oder Duroplast und das Gleitmittel als Granulat mit einem Durchmesser von 1 bis 3 mm ausgebildet ist.

7. Verfahren nach einem der Ansprüche 1 bis 6, **dadurch gekennzeichnet, dass** den Langfaserpellets als Additive Gleitmittel, Färbemittel und/oder natürliche Füllstoffe zugefügt werden.

8. Verfahren nach einem der Ansprüche 1 bis 7, **dadurch gekennzeichnet, dass** das Kunststoffteil im Spritzguss gespritzt wird.

9. Verfahren nach einem der Ansprüche 1 bis 8, **dadurch gekennzeichnet, dass** die Naturfasern während des Spritzgießens verkettet werden.

10. Verfahren nach einem der Ansprüche 1 bis 9, **dadurch gekennzeichnet, dass** im Ausgangsmaterial der Anteil an Naturfasern über 50 Gewichtsprozent, der Anteil an Thermoplast oder Duroplast höchstens 48 Gewichtsprozent und der Anteil an Gleitmittel mindestens 2 Gewichtsprozent beträgt.

11. Verfahren nach einem der Ansprüche 1 bis 10, **dadurch gekennzeichnet, dass** die Thermoplaste aus der Gruppe der Polyolefine, nämlich Polypropylen, Blendsystemen und Kunststoffen auf Basis nachwachsender Rohstoffe ausgewählt sind.

12. Verfahren nach einem der Ansprüche 1 bis 11, **dadurch gekennzeichnet, dass** eine zwei- oder dreidimensionale Dekorfläche des Kunststoffteils direkt hinterspritzt wird.

13. Verfahren nach einem der Ansprüche 1 bis 12, **dadurch gekennzeichnet, dass** das Gleitmittel Wachs ist.

## Claims

1. Method for producing a plastic part reinforced with natural fibers, wherein as starting material 5 to 120 mm long loose natural fibers as bulk material, a thermoplast or thermoset present in the form of a micro-granular compound having a diameter of 1 to 3 mm, in a weight distribution having a lubricant for pelletizing a pelletization matrix are applied and pelletized unextruded to long fiber pellets by cold forming in a temperature range of 25 °C to 85 °C and the long fiber pellets are applied afterwards for processing to an injection molding machine for spraying the plastic part.

2. Method according to claim 1, **characterized in that** the natural fibers in the long fiber pellets are distributed disordered, experience at least a direction changing bend and have a length of 5 to 40 mm.

3. Method according to claim 1 or 2, **characterized in that** the starting material is binderless.

4. Method according to claim 1, 2 or 3, **characterized in that** the long fiber pellets have a length of 5 to 30 mm and a diameter of 4 to 7 mm.

5. Method according to at least one of the claims 1 to 4, **characterized in that** the natural fibers and the thermoplast or thermoset and the lubricant for pelletization of a pelletization matrix are applied and pressed by cold forming through the pelletization matrix, wherein the natural fibers are deflected by the pelletization matrix and have an overall length in the produced long fiber pellet which is larger than the length of the long fiber pellets.

6. Method according to the preceding claim, **characterized in that** the thermoplast or thermoset and the lubricant as granular is formed with a diameter of 1 to 3 mm.

7. Method according to one of the claims 1 to 6, **characterized in that** the long fiber pellets are applied as additive lubricants, colouring matters and/or natural filler materials.

8. Method according to one of the claims 1 to 7, **characterized in that** the plastic part is sprayed by injection molding.

9. Method according to one of the claims 1 to 8, **characterized in that** the natural fibers are chained during the injection molding.

10. Method according to one of the claims 1 to 9, **characterized in that** in the starting material the proportion of natural fibers is over 50 percent by weight, the proportion of thermoplast or thermoset is at most 48 percentage by weight and the proportion of lubricant is at least 2 percentage by weight.

11. Method according to one of the claims 1 to 10, **characterized in that** the thermoplasts are chosen from the group of polyolefines, namely polypropylene, blend systems and plastics on the basis of renewable raw material.

12. Method according to one of the claims 1 to 11, **characterized in that** a two- or three-dimensional decorative surface of the plastic part is rear injected directly.

13. Method according to one of the claims 1 to 12, **characterized in that** the lubricant is wax.

## Revendications

1. Procédé de fabrication d'une pièce synthétique renforcée de fibres naturelles, dans lequel comme matériau de départ des fibres naturelles lâches de 5 à 120 mm de long sous forme de marchandises en vrac, un thermoplaste ou duroplaste se présentant sous la forme d'un microgranulat avec un diamètre de 1 à 3 mm, dans une répartition en poids définie avec un lubrifiant pour la pelletisation sont amenées à une matrice de pelletisation et sont pelletisées de manière non extrudée en pellets à fibres longues sous déformation à froid dans une plage de température de 25 °C à 85 °C et les pellets à fibres longues sont ensuite amenées pour traitement à une machine de moulage par injection pour l'injection de la pièce synthétique.

2. Procédé selon la revendication 1, **caractérisé en ce que** les fibres naturelles sont réparties de manière désordonnée dans les pellets à fibres longues, subissent lors de la déformation à froid au moins une courbure modifiant le sens et présentent une longueur de 5 à 40 mm.

3. Procédé selon la revendication 1 ou 2, **caractérisé en ce que** le matériau de départ est exempt de liant.

4. Procédé selon la revendication 1, 2 ou 3, **caractérisé en ce que** les pellets à fibres longues présentent une longueur de 5 à 30 mm et un diamètre de 4 à 7 mm.

5. Procédé selon au moins l'une quelconque des revendications 1 à 4, **caractérisé en ce que** les fibres naturelles et le thermoplaste ou le duroplaste et le lubrifiant sont amenés pour la pelletisation à une matrice de pelletisation et sont pressés sous déformation à froid par la matrice de pelletisation, dans lequel les fibres naturelles sont déviées par la matrice de pelletisation et présentent dans le pellet à fibres longues généré une longueur globale qui est supérieure à la longueur du pellet à fibres longues.

6. Procédé selon la revendication précédente, **caractérisé en ce que** le thermoplaste ou le duroplaste et le lubrifiant est réalisé en tant que granulat avec un diamètre de 1 à 3 mm.

7. Procédé selon l'une quelconque des revendications 1 à 6, **caractérisé en ce que** des lubrifiants, colorants et/ou matières de remplissage naturelles sont ajoutés aux pellets à fibres longues.

8. Procédé selon l'une quelconque des revendications 1 à 7, **caractérisé en ce que** la pièce synthétique est injectée dans le moulage par injection.

9. Procédé selon l'une quelconque des revendications 1 à 8, **caractérisé en ce que** les fibres naturelles sont enchaînées pendant le moulage par injection.

10. Procédé selon l'une quelconque des revendications 1 à 9, **caractérisé en ce que** dans le matériau de départ la part de fibres naturelles est supérieure à 50 % en poids, la part de thermoplaste ou de duroplaste s'élève au maximum à 48 % en poids et la part de lubrifiant s'élève à au moins 2 % en poids.

11. Procédé selon l'une quelconque des revendications 1 à 10, **caractérisé en ce que** les thermoplastes sont sélectionnés dans le groupe des polyoléfines, à savoir du polypropylène, de systèmes de mélange et de matières plastiques sur la base de matières premières renouvelables.

12. Procédé selon l'une quelconque des revendications 1 à 11, **caractérisé en ce qu'**une surface de décor à deux ou trois dimensions de la pièce synthétique est directement injectée derrière.

13. Procédé selon l'une quelconque des revendications 1 à 12, **caractérisé en ce que** le lubrifiant est de la cire.
